# EUROPÄISCHE PATENTSCHRIFT

(11) **EP 3 655 305 B1**
(45) Veröffentlichungstag und Bekanntmachung des Hinweises auf die Patenterteilung: **08.09.2021**
(21) Anmeldenummer: 18742987.3
(22) Anmeldetag: 13.07.2018
(51) Int. Cl.: B61H 7/08, B60T 13/74, F16D 63/00

(54) **GLIEDERMAGNETSCHIENENBREMSVORRICHTUNG EINES SCHIENENFAHRZEUGS MIT VERKLEINERTEN VERSCHLEISSTEILEN AN DEN ENDGLIEDERN**
MAGNETIC BRAKE FOR A RAIL VEHICLE WITH REDUCED SIZE WEAR PARTS OF THE END PIECES
FREIN MAGNÉTIQUE POUR UN VÉHICULE FERROVIAIRE AVEC DES PIÈCES D'USURE DE DIMENSIONS RÉDUITES DES PIÈCES D'EXTRÉMITÉ

(30) Priorität: 17.07.2017 DE 102017006736
(43) Veröffentlichungstag der Anmeldung: 27.05.2020
(73) Patentinhaber: Knorr-Bremse Gesellschaft mit beschränkter Haftung, 2340 Mödling (AT)
(72) Erfinder: KASSAN, Michael, 2751 Steinabrückl (AT)
(74) Vertreter: Wiedemann, Markus
(86) Internationale Anmeldenummer: PCT/EP2018/069077
(87) Internationale Veröffentlichungsnummer: WO 2019/016091

(56) Entgegenhaltungen:
- CH-A- 173 604
- DE-A1-102014 103 627
- DE-B3-102004 018 008
- DE-C- 688 001
- GB-A- 1 339 473

## Beschreibung

Die vorliegende Erfindung betrifft eine Gliedermagnetschienenbremsvorrichtung eines Schienenfahrzeugs gemäß dem Oberbegriff von Anspruch 1 sowie ein Schienenfahrzeug mit einer solchen Gliedermagnetschienenbremsvorrichtung gemäß Anspruch 11.

Die krafterzeugende Hauptkomponente einer elektrischen Magnetschienenbremsvorrichtung ist der Bremsmagnet. Er ist im Prinzip ein Elektromagnet, bestehend aus einer sich in Schienenrichtung erstreckenden, von einem Magnetspulenkörper getragenen Magnetspule und einem hufeisenförmigen Magnetkern. Der hufeisenförmige Magnetkern bildet an seiner der Fahrzeugschiene zugewandten Seite Polschuhe aus. Der in der Magnetspule fließende Gleichstrom bewirkt eine magnetische Spannung, die in dem Magnetkern einen magnetischen Fluss erzeugt, der sich über den Schienenkopf kurzschließt, sobald der Bremsmagnet mit seinen Polschuhen auf der Schiene aufliegt. Dadurch kommt eine magnetische Anziehungskraft zwischen Bremsmagnet und Schiene zustande. Durch die kinetische Energie des bewegten Schienenfahrzeugs wird die Magnetschienenbremsvorrichtung über Mitnehmer entlang der Schiene gezogen. Hierbei entsteht durch die Gleitreibung zwischen Bremsmagnet und Schiene in Verbindung mit der magnetischen Anziehungskraft eine Bremskraft. Durch den Reibkontakt mit der Schiene entsteht an den Polschuhen des Bremsmagneten Reibverschleiß, welcher ein maximales Verschleißmaß nicht überschreiten darf, da ansonsten der Magnetspulenkörper beschädigt wird.

Prinzipiell kann man nach dem konstruktiven Aufbau zwei verschiedene Arten von Magnetschienenbremsvorrichtungen unterscheiden.

Zum einen kann die Magnetschienenbremsvorrichtung eine Starrmagnetschienenbremsvorrichtung sein, bei welcher die Bremsmagneten Starrmagneten sind, wobei ein Bremsmagnet einen Magnetspulenkörper aufweist, welcher mit zwei Teilen eines Magnetkerns verschraubt ist, welche im Bereich der Polschuhe ihrer Schenkel in dem Spalt durch einen Zwischenkörper aus unmagnetischem Material in Längsrichtung getrennt sind. Das unmagnetische Material des Zwischenkörpers dient zur Vermeidung eines magnetischen Kurzschlusses zwischen den Polschuhen. Starrmagnetschienenbremsvorrichtungen werden meist im Nahverkehr bei Straßen- und Stadtbahnen eingesetzt.

Weiterhin sind die hier in Frage stehenden Gliedermagnetschienenbremsvorrichtungen mit Gliedermagneten als Bremsmagneten bekannt, bei welchen der Magnetspulenkörper Trennwände und dazwischen angeordnete Kammern aufweist. In den Kammern zwischen den Trennwänden sind Magnetkerne begrenzt beweglich gehalten, die sich während des Bremsvorgangs ausrichten, um Unebenheiten am Schienenkopf besser folgen zu können. In diesem Fall sind die Polschuhe an den der Schiene zugewandten Stirnflächen der Magnetkerne der Zwischenglieder ausgebildet. Gliedermagnetschienenbremsvorrichtungen werden standardmäßig im Vollbahnbereich eingesetzt.

Die Größe der Bremskraft einer Magnetschienenbremsvorrichtung ist u.a. vom magnetischen Fluss des Magnetkreises, d.h. auch von der Geometrie des Magnetkerns oder Magnetkerne, der magnetischen Durchflutung und den Reibverhältnissen zwischen Bremsmagnet und Schiene abhängig.

DE 688 001 C offenbart eine elektromagnetische Schienenbremse mit in einzelne Teile zerlegbarem Joch und unterteilten Schleifschuhen, GB 1 339 473 A und CH 173 604 A jeweils eine elektromagnetische Bremse mit auswechselbaren Polschuhen und DE 10 2014 103 627 A1 eine Gehäusevorrichtung für einen Magnetkörper für eine elektromagnetische Schienenbremse mit einer Kabeldurchführöffnung zum Durchführen eines elektrischen Anschlusskabels.

Eine gattungsgemäße Gliedermagnetschienenbremsvorrichtung bzw. ein solches Schienenfahrzeug ist beispielsweise aus DE 10 2004 018 008 B3 bekannt. Dort weisen die Endglieder Endglied-Magnetkerne auf, bei denen sich einstückige Schenkel bis zum Oberzug des Magnetspulenkörpers erstrecken und seitlich an einem Steg befestigt sind, welcher die Durchgangsöffnung des Magnetspulenkörpers durchdringt.

Demgegenüber liegt die Aufgabe der Erfindung darin, eine Gliedermagnetschienenbremsvorrichtung der eingangserwähnten Art derart weiterzubilden, dass sich ihre Betriebskosten reduzieren. Weiterhin soll auch eine möglichst einfache Stromversorgung der Magnetspulenwicklung möglich sein. Schließlich soll auch ein Schienenfahrzeug mit einer solchen Gliedermagnetschienenbremsvorrichtung zur Verfügung gestellt werden.

Diese Aufgabe wird durch die in den Patentansprüchen 1 und 11 gekennzeichneten Vorrichtungen gelöst.

Weitere vorteilhafte Ausgestaltungen und Weiterbildungen der Erfindung ergeben sich aus den abhängigen Ansprüchen.

### Offenbarung der Erfindung

Die Erfindung geht aus von einer Gliedermagnetschienenbremsvorrichtung eines Schienenfahrzeugs ist mit wenigstens einem durch einen Gliedermagneten gebildeten Bremsmagneten, mit wenigstens den folgenden Merkmalen: Der Gliedermagnet weist einen Magnetspulenkörper, wenigstens einen Magnetkern, zwei mit dem Magnetspulenkörper starr verbundene Endglieder und mehrere jeweils mit dem Magnetspulenkörper begrenzt beweglich verbundene und in Längsrichtung des Magnetspulenkörpers gesehen hintereinander angeordnete Zwischenglieder sowie mehrere Trennwände auf, wobei zwischen zwei benachbarten Zwischengliedern jeweils eine Trennwand angeordnet ist, der Magnetspulenkörper trägt wenigstens eine Magnetspulenwicklung, jeweils ein Endglied weist einen Endglied-Magnetkern auf, der Magnetspulenkörper weist wenigstens einen Oberzug und einen Unterzug auf, welche dazwischen eine Durchgangsöffnung ausbilden, der Endglied-Magnetkern ist in einer senkrecht zur Längsrichtung des Magnetspulenkörpers angeordneten Querschnittsebene gesehen hufeisenförmig ausgebildet, mit einem Steg und zwei sich von dem Steg weg erstreckende Schenkel, wobei an den zu einer Schiene weisenden Enden der Schenkel zum Reibkontakt mit der Schiene vorgesehene Polschuhe ausgebildet sind, der Steg erstreckt sich quer durch die Durchgangsöffnung des Magnetspulenkörpers.

Gemäß der Erfindung ist vorgesehen, dass der Endglied-Magnetkern ein einstückiges, wenigstens den Steg und wenigstens einen ersten in Einbaulage oberen Teil der Schenkel umfassendes Endglied-Magnetkern-Oberteil aufweist, an welchem jeweils ein zweiter in Einbaulage unterer und separater Teil eines Schenkels lösbar befestigt ist, an dessen freiem Ende der Polschuh des Schenkels ausgebildet ist. Weiterhin ist in einer senkrecht zur Längsrichtung des Magnetspulenkörpers angeordneten Querschnittsebene gesehen der zweite untere Teil eines Schenkels nach innen gebogen verlaufend ausgebildet.

Das Endglied-Magnetkern-Oberteil, welches an dem Magnetspulenkörper befestigt ist, nimmt beispielsweise den Oberzug und den Unterzug des Magnetspulenkörpers wenigstens teilweise auf. Hierzu weist beispielsweise das Endglied-Magnetkern-Oberteil eine in Einbaulage obere, im Querschnitt mittige U-förmige Ausnehmung auf, in welche der Oberzug des Magnetspulenkörpers wenigstens teilweise eingreift. Ebenso kann das Endglied-Magnetkern-Oberteil eine in Einbaulage untere, im Querschnitt mittige U-förmige Ausnehmung aufweisen, in welche der Unterzug des Magnetspulenkörpers wenigstens teilweise eingreift.

Der Vorteil der Erfindung liegt dann darin, dass dadurch das durch die Reibung zwischen Schiene und Polschuh verschleißende und daher in bestimmten Zeitabständen auszuwechselnde Teil nicht wie beim Stand der Technik durch den gesamten Schenkel, sondern lediglich durch den separaten zweiten unteren Teil eines Schenkels gebildet wird. Dadurch werden die Masse der auszuwechselnden Teile und damit auch die Betriebskosten der Gliedermagnetschienenbremsvorrichtung reduziert.

Ein weiterer Vorteil besteht darin, dass dann an dem Endglied-Magnetkern-Oberteil genügend Platz vorhanden ist, um dort eine elektrische Anschlusseinrichtung anzuordnen, durch welche die wenigstens eine Magnetspulenwicklung stromversorgt wird. Dabei kann die elektrische Anschlusseinrichtung beispielsweise an einer Seitenfläche und/oder an einer von der Schiene wegweisenden Oberfläche des Endglied-Magnetkern-Oberteils angeordnet sein.

Da die Endglieder starr und nicht beweglich wie die Zwischenglieder mit dem Magnetspulenkörper verbunden sind, eignen sich die Zwischenglieder und bei der Erfindung insbesondere die Endglied-Magnetkern-Oberteile der Endglieder für eine Anordnung der elektrischen Anschlusseinrichtung.

Durch die in den Unteransprüchen aufgeführten Maßnahmen sind vorteilhafte Weiterbildungen und Verbesserungen der in Anspruch 1 angegebenen Erfindung möglich.

Bevorzugt erstreckt sich in Einbaulage gesehen das Endglied-Magnetkern-Oberteil in vertikaler Richtung über den Unterzug ein Stück weit nach unten hinaus.

Auch kann in Einbaulage gesehen sich das Endglied-Magnetkern-Oberteil in vertikaler Richtung wenigstens über ein unteres, die Durchgangsöffnung begrenzendes Ende des Oberzugs nach oben hinaus erstrecken.

Gemäß einer Weiterbildung kann an wenigstens einer von der Schiene wegweisenden Oberfläche des Endglied-Magnetkern-Oberteils eine Leiste lösbar befestigt sein. Hierbei kann die Leiste an einer Hubvorrichtung lösbar befestigt sein, durch welche der Gliedermagnet vertikal stellbar ist.

Bevorzugt weist der erste obere Teil eines Schenkels eine erste gestufte Trennfläche und der zweite untere Teil eines Schenkels eine zweite gestufte Trennfläche auf, wobei die erste gestufte Trennfläche und die zweite gestufte Trennfläche komplementär ausgebildet sind und ineinandergreifen.

Vorzugsweise kann eine in Einbaulage horizontale Verschraubung vorgesehen, mit welcher der erste obere Teil eines Schenkels und der zweite untere Teil eines Schenkels miteinander verschraubt sind. Horizontale Verschraubung bedeutet, dass eine Schraubenlängsachse wenigstens einer Schraube der Verschraubung in Einbaulage in einer horizontalen Ebene liegt.

Gemäß einer Fortbildung kann in oder an wenigstens einem Endglied-Magnetkern-Oberteil eine elektrische Anschlusseinrichtung angeordnet sein, durch welche die wenigstens eine Magnetspulenwicklung stromversorgt wird. Die elektrische Anschlusseinrichtung ist daher ausgebildet, um ein erstes elektrischer Kabel anzuschließen, welches elektrische Energie von dem Schienenfahrzeug zu der Gliedermagnetschienenbremsvorrichtung leitet. Andererseits ist an der elektrischen Anschlusseinrichtung ein zweites elektrisches Kabel angeschlossen ist, welches andererseits an die Magnetspulenwicklung angeschlossen ist, um die über das erste elektrische Kabel herangeführte elektrische Energie in die Magnetspulenwicklung zu leiten.

Bevorzugt kann auch die elektrische Anschlusseinrichtung in einer Ausnehmung an einer Seitenfläche des Endglied-Magnetkern-Oberteils einen elektrischen Anschluss aufweisen, an welchen das erste Kabel angeschlossen ist, welches über eine Bohrung herangeführt wird, die in einer von der Schiene weg weisenden Oberfläche des Endglied-Magnetkern-Oberteils ausgebildet ist und in die Ausnehmung mündet. Hierdurch ergibt sich eine besonders kompakte Ausführung der elektrischen Anschlusseinrichtung.

Die elektrische Anschlusseinrichtung kann an einer Seitenfläche und/oder an einer von der Schiene weg weisenden Oberfläche des Endglied-Magnetkern-Oberteils angeordnet sein.

Die Erfindung betrifft auch ein Schienenfahrzeug mit einer hierin beschriebenen Gliedermagnetschienenbremsvorrichtung.

Im Rahmen der Erfindung kann ein Schienenfahrzeug einen oder mehrere Wagen mit oder ohne eigenen Antrieb und/oder ein Zugfahrzeug in beliebiger Kombination bezeichnen. Insbesondere kann ein Schienenfahrzeug Triebwagen aufweisen. Ein Schienenfahrzeug oder ein Wagen des Schienenfahrzeugs kann Drehgestelle aufweisen, an denen Radachsen des Fahrzeugs angeordnet sind. Die Drehgestelle können an einem Wagenaufbau befestigt sein. Vorzugsweise ist dann eine hierin beschriebene Magnetschienenbremsvorrichtung an einem Drehgestell aufgehängt.

Die Erfindung wird nun mit Bezug auf die begleitenden Zeichnungen anhand einer bevorzugten Ausführungsform beispielhaft erläutert. Es zeigen:
- Fig.1: eine perspektivische Darstellung eines Gliedermagneten einer Gliedermagnetschienenbremsvorrichtung gemäß einer bevorzugten Ausführungsform;
- Fig. 2: eine perspektivische Darstellung eines Magnetspulenkörpers der Gliedermagnetschienenbremsvorrichtung von Fig.1 mit an dem Magnetspulenkörper starr befestigten Endgliedern;
- Fig.3: eine Querschnittsdarstellung entlang der Ebene III-III von Fig.1 mit der Gliedermagnetschienenbremsvorrichtung in Gebrauchslage;
- Fig.4: eine Querschnittsdarstellung entlang der Ebene IV-IV von Fig.1 mit der Gliedermagnetschienenbremsvorrichtung in Gebrauchslage;
- Fig.5: eine perspektivische Darstellung eines Endglieds des Gliedermagneten der Gliedermagnetschienenbremsvorrichtung von Fig.1.

### Beschreibung des Ausführungsbeispiels

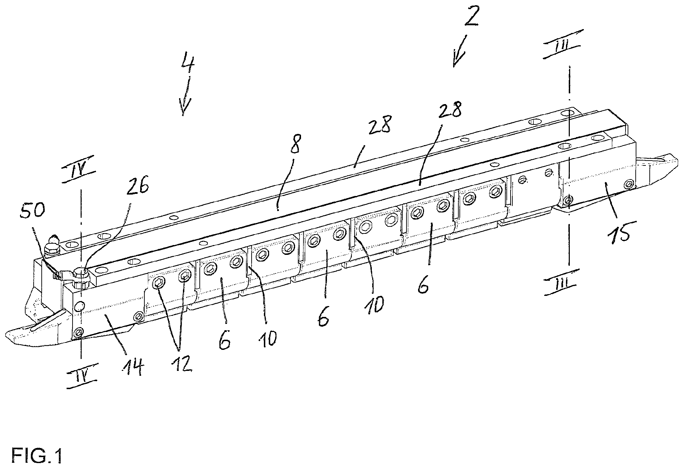

Um sich besser an Unebenheiten einer Schiene eines Gleises anpassen zu können, sind bei einer in **Fig.1** dargestellten Ausführungsform eines Gliedermagneten 2 einer bevorzugt als Gliedermagnetschienenbremsvorrichtung 4 ausgebildeten Magnetschienenbremsvorrichtung mehrere Zwischenglieder 6 vorhanden, welche an einem sich in Längsrichtung der Schiene 1 erstreckenden Magnetspulenkörper 8 begrenzt beweglich gehalten sind. Dies ist vorzugsweise dadurch gelöst, dass die Zwischenglieder 6 Magnetkerne aufweisen, die symmetrisch zu einer vertikalen Mittelebene an den voneinander weg weisenden Seitenflächen des Magnetspulenkörpers 8 in zwischen Trennwänden 10 gebildeten Kammern 11 begrenzt kipp- bzw. schwenkbar aufgehängt sind. Jeweils endseitig sind an dem Magnetspulenkörper 8 Endglieder 14, 15 angeordnet.

In **Fig.1** ist aus Maßstabsgründen lediglich einer der mit einer Schiene zusammenwirkenden Gliedermagnete 2 gezeigt, wobei aber spiegelsymmetrisch in Bezug auf eine senkrechte Längsmittelebene der beiden Schienen des Gleises ein weiterer, hier nicht sichtbarer Gliedermagnet 2 vorhanden ist. Die beiden Gliedermagneten 2 sind dann über hier nicht gezeigte Querstreben miteinander verbunden. Mittels einer hier nicht gezeigten Befestigungsvorrichtung sind die Gliedermagneten 2 an einer Hubvorrichtung befestigt, welche einen vertikalen Hub der Gliedermagneten 2 bewirkt, um die Zwischenglieder 6 in Kontakt mit einem Schienenkopf der jeweiligen Schiene 1 zu bringen. Die Hubvorrichtung ist wiederum an einem Drehgestell des Schienenfahrzeugs gehalten.

Die Übertragung der Bremskräfte auf den Magnetspulenkörper 8 erfolgt dann von der Kontaktstelle der Zwischenglieder 6 über die Trennwände 10 und Endstücke 14, 15, die starr mit dem Magnetspulenkörper 8 verbunden sind und dem Gliedermagnet 2 über Weichen und Schienenstößen eine gute Führung geben. Der Magnetspulenkörper 8, der wenigstens eine von außen nicht sichtbare Magnetspule 9 trägt, trägt folglich die Zwischenglieder 6, welche zusammen einen Magnetkern des Bremsmagneten 2 bilden.

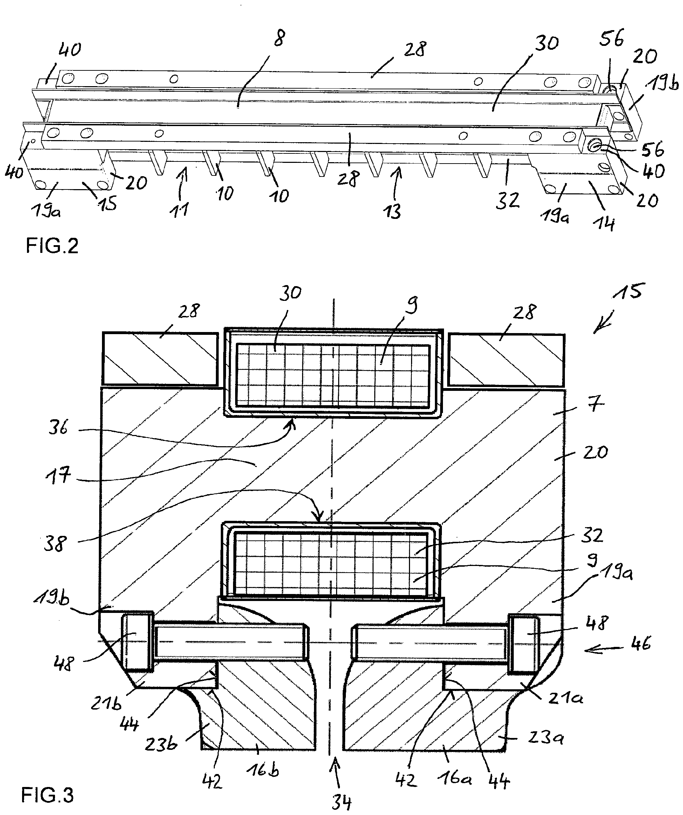

In **Fig.2** ist der Magnetspulenkörper 8 in einer perspektivischen Darstellung dargestellt. Der Magnetspulenkörper 8 dient zur Aufnahme der zur Erzielung des notwendigen elektromagnetischen Flusses erforderlichen Wicklungen der Magnetspule 9. In einer Durchgangsöffnung 13 des Magnetspulenkörpers 8, die oval oder rechteckig ausgeführt sein kann, sind in gleichmäßigen Abständen die Trennwände 10 verteilt und am Magnetspulenkörper 8 in ihren Stellungen fixiert. Zwischen je zwei derartigen Trennwänden 10 werden im Querschnitt hufeisenförmige, den magnetischen Fluss aufnehmende Magnetkerne der Zwischenglieder 6 die Durchgangsöffnung 13 eingesetzt. Zwar sind in **Fig.2** nicht die Zwischenglieder, jedoch die Endglieder 14, 15 dargestellt, welche starr mit dem Magnetspulenkörper 8 verbunden sind, beispielsweise durch Verschweißung. Ein Oberzug 30, der Unterzug 32 sowie die Endglieder 14, 15 des Magnetspulenkörpers 8 weisen hier beispielsweise jeweils eine U-Profilschiene auf, wobei in einem nutartigen, nach außen hin offenen Wickelraum der U-Profilschienen die Wicklung der Magnetspule 9 umlaufend angeordnet ist.

Wie insbesondere **Fig.3** veranschaulicht, weist ein solches Endglied 14, 15 jeweils einen Endglied-Magnetkern 7 auf, mit einem die Durchgangsöffnung 13 durchgreifenden und in Gebrauchslage horizontalen Steg 17 und von dem Steg etwa senkrecht vertikal nach unten, d.h. zu einem Schienenkopf der Schiene 1 hin ragenden Schenkeln 19a, 19b. Ein solcher Endglied-Magnetkern 7 umgreift dann mit seinem Steg 17 und seinen Schenkeln 19a, 19b einen Unterzug 32 des Magnetspulenkörpers 8. An den freien Enden der Schenkel 19a, 19b sind Polschuhe 16a, 16b ausgebildet, welche zum Reibungseingriff mit dem Schienenkopf vorgesehen sind, wenn die Hubvorrichtung den Gliedermagneten 2 in Richtung Schiene absenkt.

Wie am besten **Fig.3** zeigt, weist das Englied-Magnetkern 7 des Endglieds 15 ein einstückiges, wenigstens den Steg 17 und wenigstens einen ersten in Einbaulage oberen Teil 21a, 21b der Schenkel 19a, 19b umfassendes Endglied-Magnetkern-Oberteil 20 auf, an welchem jeweils ein zweiter in Einbaulage unterer und separater Teil 23a, 23b eines Schenkels 19a, 19b lösbar befestigt ist, an dessen freiem Ende jeweils der Polschuh 16a, 16b des betreffenden Schenkels 19a, 19b ausgebildet ist, welche dann Nord- und Südpol des Gliedermagneten 2 ausbilden. Zwischen den Polschuhen 16a, 16b und einem Schienenkopf der Schiene ist in der gelösten Stellung der Gliedermagnetschienenbremsvorrichtung 4 dann ein Luftspalt vorhanden.

In **Fig.2** sind an dem Magnetspulenkörper 8 die Endglied-Magnetkern-Oberteile 20 der Endglieder 14, 15 gezeugt, welche mit dem Magnetspulenkörper 8 beispielsweise verschweißt sind.

Die Polschuhe 16a, 16b bestehen bevorzugt aus einem Reibwerkstoffmaterial, z.B. aus Stahl, Sphäroguss oder aus Sinterwerkstoffen. In einem Spalt 34 zwischen den beiden Polschuhen 16a, 16b kann ein den Spalt 34 ausfüllender, nicht magnetischer und temperaturbeständiger, hier nicht gezeigter Zwischenkörper angeordnet sein.

Bevorzugt erstreckt sich in Einbaulage gesehen das Endglied-Magnetkern-Oberteil 20 in vertikaler Richtung über den Unterzug 32 des Magnetspulenkörpers 8 ein Stück weit nach unten hinaus. Andererseits erstreckt sich in Einbaulage das Endglied-Magnetkern-Oberteil 20 in vertikaler Richtung wenigstens über ein unteres, die Durchgangsöffnung 13 begrenzendes Ende des Oberzugs 30 nach oben hinaus. Das Endglied-Magnetkern-Oberteil 20 weist beispielsweise eine obere, im Querschnitt mittige U-förmige Ausnehmung 36 auf, in welche der Oberzug 30 wenigstens teilweise eingreift. Ebenso weist das Endglied-Magnetkern-Oberteil 20 beispielsweise eine untere, im Querschnitt mittige U-förmige Ausnehmung 38 auf, in welche der Unterzug 32 wenigstens teilweise eingreift.

Weiterhin ist beispielsweise an den beiden freien von der Schiene wegweisenden Oberflächen 40 des Endglied-Magnetkern-Oberteils 20 jeweils eine Leiste 28 lösbar befestigt sein. Hierbei können die Leisten 28 an der Hubvorrichtung lösbar befestigt sein, durch welche der Gliedermagnet 2 vertikal stellbar ist.

Bevorzugt weist der erste obere Teil 21a, 21b eines Schenkels 19a, 19b eine erste gestufte Trennfläche 42 und der separate zweite untere Teil 23a, 23b eines Schenkels 19a, 19b eine zweite gestufte Trennfläche 44 auf, wobei die erste gestufte Trennfläche 42 und die zweite gestufte Trennfläche 44 komplementär ausgebildet sind und ineinander greifen.

Bevorzugt ist in einer senkrecht zur Längsrichtung des Magnetspulenkörpers 8 angeordneten Querschnittsebene gesehen der separate zweite untere Teil 23a, 23b eines Schenkels 19a, 19b nach innen gebogen verlaufend ausgebildet sein.

Vorzugsweise kann eine in Einbaulage horizontale Verschraubung 46 vorgesehen, mit welcher der erste obere Teil 21a, 21b eines Schenkels 19a, 19b und der separate zweite untere Teil 23a, 23b eines Schenkels 19a, 19b miteinander verschraubt sind. Die horizontale Verschraubung beinhaltet hier beispielsweise zwei Kopfschrauben 48, welche von seitlich außen durch horizontale, senkrecht zu einer Längsmittelebene des Magnetspulenkörpers 8 angeordnete Durchgangsbohrungen in den ersten oberen Teilen 21a, 21b eines Schenkels 19a, 19b durchgesteckt und in Gewindelöcher in den zweiten unteren Teilen 23a, 23b eingeschraubt sind.

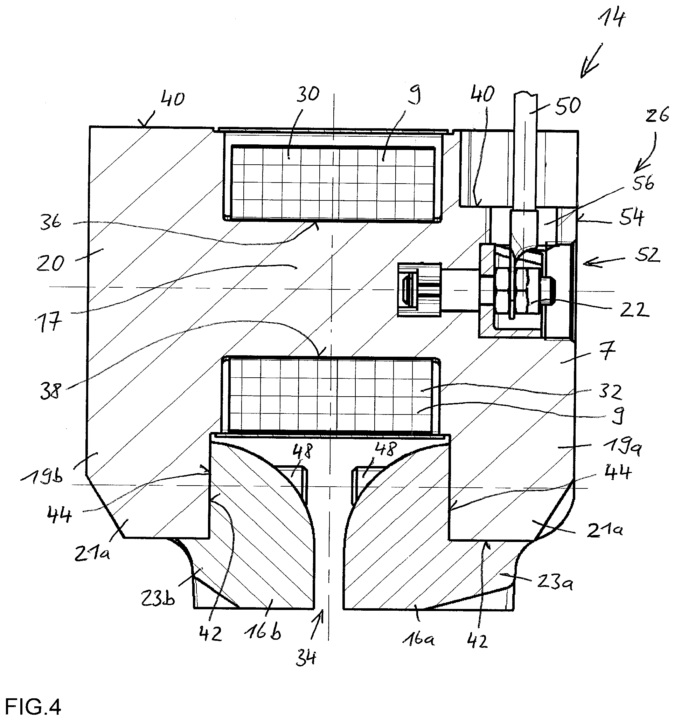

Auch die hier nicht gezeigten Magnetkerne der Zwischenglieder weisen einen hufeisenförmigen Querschnitt auf, mit einem Steg von welchem zwei Schenkel quer nach unten weg ragen. Dabei ist der Magnetkern zweiteilig ausgebildet ist, wobei ein erster Teil eine erste Hälfte des Stegs, einen ersten Schenkel und einen ersten Polschuh und ein zweiter, von dem ersten Teil separater Teil eine zweite Hälfte des Stegs, einen zweiten Schenkel und einen zweiten Polschuh umfasst. Die erste Hälfte und die zweite Hälfte des Stegs eines Magnetkerns durchragen dann die Durchgangsöffnung 13 des Magnetspulenkörpers und sind mittels einer horizontalen Schraubverbindung 12 aneinander befestigt, wie anhand von **Fig.1** und **Fig.2** leicht vorstellbar ist. Aus **Fig.4** geht hervor, dass in dem Endglied-Magnetkern-Oberteil 20 des Endglieds 14 eine elektrische Anschlusseinrichtung 26 angeordnet ist, durch welche die Magnetspule 9 stromversorgt wird. An die elektrische Anschlusseinrichtung 26 ist daher ein erstes elektrisches Kabel 50 angeschlossen, welches elektrische Energie von dem Schienenfahrzeug zu dem Gliedermagneten 2 leitet. Andererseits ist an der elektrischen Anschlusseinrichtung 26 ein hier nicht gezeigtes zweites elektrisches Kabel angeschlossen, welches andererseits an die Magnetspule 9 angeschlossen ist, um die über das erste elektrische Kabel 50 herangeführte elektrische Energie in die Magnetspule 9 zu leiten.

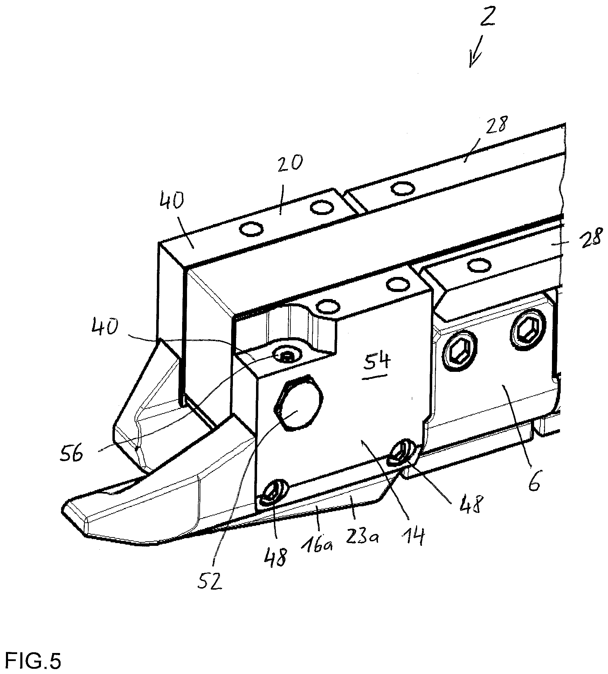

Die elektrische Anschlusseinrichtung 26 kann insbesondere in einer Ausnehmung 52 an einer Seitenfläche 54 des Endglied-Magnetkern-Oberteils 20 einen elektrischen Anschluss 22 aufweisen, an welchen das erste Kabel 50 angeschlossen ist, welches beispielsweise über eine Bohrung 56 herangeführt wird, die in einer der von der Schiene weg weisenden freien Oberflächen 40 des Endglied-Magnetkern-Oberteils 20 ausgebildet ist und in die Ausnehmung 52 mündet. **Fig.5** zeigt in perspektivischer vergrößerter Ansicht das Endglied 14 des Gliedermagneten 2 ohne montierte elektrische Anschlusseinrichtung 26.

Zur Durchführung einer Bremsung werden die beiden Gliedermagneten 2 der Gliedermagnetschienenbremsvorrichtung 4 durch die hier nicht gezeigte Hubvorrichtung auf die Schienen herabgesenkt bis die Polschuhe 16a, 16b der Magnetkerne 7 der Zwischenglieder 6 und der Endglieder 14, 15 den Schienenkopf berühren und die Spulenwicklungen der Magnetspule 9 bestromt, so dass der Stromfluss in den Magnetkernen 7 der Zwischenglieder 6 und der Endglieder 14, 15 einen magnetischen Fluss erzeugt, der durch den Schienenkopf geschlossen wird. Die Polschuhe 16a, 16b werden infolgedessen in einer dem magnetischen Fluss entsprechenden Stärke auf den Schienenkopf 18 herabgezogen und an denselben angepresst. Die in Richtung der Längsachse der Magnetspulenkörper 8 vorhandene Beweglichkeit der Magnetkerne 7 lässt diese auch auf verschieden abgenutzten Schienenköpfen 18 plan aufliegen und den gewünschten magnetischen Fluss sowie über den Reibschluss zwischen den Polschuhen 16a, 16b und dem Schienenkopf 18 dann die Bremskraft zustande kommen. Die Trennwände 10 nehmen die durch die Reibung zwischen den Magnetkerne 7 und dem Schienenkopf 18 entstehenden Bremskräfte auf und leiten sie an den Magnetspulenkörper 8 weiter, von welchem sie auf die Befestigungsvorrichtung und die Hubvorrichtung und von dort auf das Drehgestell übertragen werden.

### Bezugszeichenliste

- 2: Gliedermagnet
- 4: Gliedermagnetschienenbremsvorrichtung
- 6: Zwischenglieder
- 7: Magnetkerne
- 8: Magnetspulenkörper
- 9: Magnetspule
- 10: Trennwände
- 11: Kammer
- 12: Schraubverbindung
- 13: Durchgangsöffnung
- 14: Endglied
- 15: Endglied
- 16a/b: Polschuhe
- 17: Steg
- 19a,b: Schenkel
- 20: Endglied-Magnetkern-Oberteil
- 21a/b: erster oberer Teil
- 22: elektr. Anschluss
- 23a/b: zweiter unterer Teil
- 26: Anschlusseinrichtung
- 28: Leiste
- 30: Oberzug
- 32: Unterzug
- 34: Spalt
- 36: obere Ausnehmung
- 38: untere Ausnehmung
- 40: Oberfläche
- 42: erste gestufte Trennfläche
- 44: zweite gestufte Trennfläche
- 46: Verschraubung
- 48: Kopfschrauben
- 50: Ausnehmung
- 54: Seitenfläche
- 56: Bohrung

## Patentansprüche

1. Gliedermagnetschienenbremsvorrichtung eines Schienenfahrzeugs ist mit wenigstens einem durch einen Gliedermagneten (2) gebildeten Bremsmagneten, mit wenigstens den folgenden Merkmalen:
a) Der Gliedermagnet (2) weist einen Magnetspulenkörper (8), wenigstens einen Magnetkern, zwei mit dem Magnetspulenkörper (8) starr verbundene Endglieder (14, 15) und mehrere jeweils mit dem Magnetspulenkörper (8) begrenzt beweglich verbundene und in Längsrichtung des Magnetspulenkörpers (8) gesehen hintereinander angeordnete Zwischenglieder (6) sowie mehrere Trennwände (10) auf, wobei zwischen zwei benachbarten Zwischengliedern (6) jeweils eine Trennwand (10) angeordnet ist,
b) der Magnetspulenkörper (8) trägt wenigstens eine Magnetspulenwicklung (9)
c) jeweils ein Endglied (14, 15) weist einen Endglied-Magnetkern (7) auf,
d) der Magnetspulenkörper (8) weist wenigstens einen Oberzug (30) und wenigstens einen Unterzug (32) auf, welche dazwischen eine Durchgangsöffnung (13) ausbilden,
e) der Endglied-Magnetkern (7) ist in einer senkrecht zur Längsrichtung des Magnetspulenkörpers (8) angeordneten Querschnittsebene gesehen hufeisenförmig ausgebildet, mit einem Steg (17) und zwei sich von dem Steg (17) weg erstreckende Schenkel (19a, 19b), wobei an den zu einer Schiene (1) weisenden Enden der Schenkel (19a, 19b) zum Reibkontakt mit der Schiene (1) vorgesehene Polschuhe (16a, 16b) ausgebildet sind,
f) der Steg (17) erstreckt sich quer durch die Durchgangsöffnung (13) des Magnetspulenkörpers (8), **dadurch gekennzeichnet, dass**
g) der Endglied-Magnetkern (7) ein einstückiges, wenigstens den Steg (17) und wenigstens einen ersten in Einbaulage oberen Teil (21a, 21b) der Schenkel (19a, 19b) umfassendes Englied-Magnetkern-Oberteil (20) aufweist, an welchem jeweils ein zweiter in Einbaulage unterer und separater Teil (23a, 23b) eines Schenkels (19a, 19b) lösbar befestigt ist, an dessen freiem Ende der Polschuh (16a, 16b) des Schenkels (19a, 19b) ausgebildet ist, und dass
h) in einer senkrecht zur Längsrichtung des Magnetspulenkörpers (8) angeordneten Querschnittsebene gesehen der zweite untere Teil (23a, 23b) eines Schenkels (19a, 19b) nach innen gebogen verlaufend ausgebildet ist.

2. Gliedermagnetschienenbremsvorrichtung nach Anspruch 1, **dadurch gekennzeichnet, dass** in Einbaulage gesehen sich das Endglied-Magnetkern-Oberteil (20) in vertikaler Richtung über den Unterzug (32) ein Stück weit nach unten hinaus erstreckt.

3. Gliedermagnetschienenbremsvorrichtung nach Anspruch 1 oder 2, **dadurch gekennzeichnet, dass** in Einbaulage gesehen sich das Endglied-Magnetkern-Oberteil (20) in vertikaler Richtung wenigstens über ein unteres, die Durchgangsöffnung (13) begrenzendes Ende des Oberzugs (30) nach oben hinaus erstreckt.

4. Gliedermagnetschienenbremsvorrichtung nach einem der vorhergehenden Ansprüche, **dadurch gekennzeichnet, dass** an wenigstens einer von der Schiene wegweisenden Oberfläche (40) des Endglied-Magnetkern-Oberteils (20) wenigstens eine Leiste (28) lösbar befestigt ist.

5. Gliedermagnetschienenbremsvorrichtung nach Anspruch 4, **dadurch gekennzeichnet, dass** die Leiste (28) an einer Hubvorrichtung lösbar befestigt ist, durch welche der Gliedermagnet (2) vertikal stellbar ist.

6. Gliedermagnetschienenbremsvorrichtung nach einem der vorhergehenden Ansprüche, **dadurch gekennzeichnet, dass** der erste obere Teil (21a, 21b) eines Schenkels (19a, 19b) eine erste gestufte Trennfläche (42) und der zweite untere Teil (23a, 23b) eines Schenkels (19a, 19b) eine zweite gestufte Trennfläche (44) aufweist, wobei die erste gestufte Trennfläche (42) und die zweite gestufte Trennfläche (44) komplementär ausgebildet sind und ineinander greifen.

7. Gliedermagnetschienenbremsvorrichtung nach einem der vorhergehenden Ansprüche, **dadurch gekennzeichnet, dass** eine in Einbaulage horizontale Verschraubung (46) vorgesehen ist, mit welcher der erste obere Teil (21a, 21b) eines Schenkels (19a, 19b) und der zweite untere Teil (23a, 23b) eines Schenkels (19a, 19b) miteinander verschraubt sind.

8. Gliedermagnetschienenbremsvorrichtung nach einem der vorhergehenden Ansprüche, **dadurch gekennzeichnet, dass** in oder an wenigstens einem Endglied-Magnetkern-Oberteil (20) eine elektrische Anschlusseinrichtung (26) für ein erstes Kabel (50) angeordnet ist, durch welche die wenigstens eine Magnetspulenwicklung (9) stromversorgt wird.

9. Gliedermagnetschienenbremsvorrichtung nach Anspruch 8, **dadurch gekennzeichnet, dass** die elektrische Anschlusseinrichtung (26) an einer Seitenfläche (54) und/oder an einer von der Schiene (1) wegweisenden Oberfläche (40) des Endglied-Magnetkern-Oberteils (20) angeordnet ist.

10. Gliedermagnetschienenbremsvorrichtung nach Anspruch 9, **dadurch gekennzeichnet, dass** die elektrische Anschlusseinrichtung (26) in einer Ausnehmung (52) an einer Seitenfläche (54) des Endglied-Magnetkern-Oberteils (20) einen elektrischen Anschluss (22) aufweist, an welchen das erste Kabel (50) angeschlossen ist, welches über eine Bohrung (56) herangeführt wird, die in einer von der Schiene weg weisenden Oberfläche (40) des Endglied-Magnetkern-Oberteils (20) ausgebildet ist und in die Ausnehmung (52) mündet.

11. Schienenfahrzeug mit wenigstens einer Gliedermagnetschienenbremsvorrichtung nach wenigstens einem der vorhergehenden Ansprüche.

## Claims

1. Link magnetic rail brake device of a rail vehicle, with at least one brake magnet formed by a link magnet (2), having at least the following features:
(a) the link magnet has a magnetic coil body (8), at least one magnet core, two end-members (14, 15) solidly fixed to the magnetic coil body (8) and a plurality of intermediate links (6) each connected to the magnetic coil body (8) and able to undergo limited movement, arranged one after another as viewed in the longitudinal direction of the magnetic coil body (8), as well as a plurality of separating partitions (10), wherein between two adjacent intermediate links (6) a separating partition (10) is arranged in each case,
(b) the magnetic coil body (8) supports at least one magnetic solenoid winding (9),
(c) each end-member (14, 15) has an end-member magnetic core (7),
(d) the magnetic coil body (8) has at least one upper edge (30) and at least one lower edge (32), which between them form a passage opening (13),
(e) the end-member magnetic core (7), as viewed in a cross-section plane arranged perpendicularly to the longitudinal direction of the magnetic coil body (8), is shaped like a horseshoe, with a web (17) and two limbs (19a, 19b) that extend away from the web (17), wherein on the ends of the limbs (19a, 19b) facing toward a rail (1) pole pieces (16a, 16b) provided for frictional contact with the rail (1) are provided,
(f) the web (17) extends transversely through the passage opening (13) of the magnetic coil body (8),
**characterised in that**
(g) the end-member magnetic core (7) has a one-piece end-member magnetic core upper portion (20) that comprises at least the web (17) and, in the fitted position, at least a first upper portion (21a, 21b) of the limb (19a, 19b) to which, in the fitted position, in each case a second, lower and separate portion (23a, 23b) of a limb (19a, 19b) is detachably connected, at the free end of which the pole piece (16a, 16b) of the limb (19a, 19b) is formed, and
(h) as viewed in a cross-section plane arranged perpendicularly to the longitudinal direction of the magnetic coil body (8), the second, lower portion (23a, 23b) of a limb (19a, 19b) is formed with an inward-directed bend.

2. Link magnetic rail brake device according to Claim 1,
**characterised in that** as viewed in the fitted position, the end-member magnetic core upper portion (20) extends in the vertical direction a short distance downward beyond the lower edge (32).

3. Link magnetic rail brake device according to Claims 1 or 2,
**characterised in that** as viewed in the fitted position, the end-member magnetic core upper portion (20) extends in the vertical direction upward at least beyond a lower end of the upper edge (30) that delimits the passage opening (13).

4. Link magnetic rail brake device according to any of the preceding claims,
**characterised in that** on at least one of the surfaces (40) of the end-member magnetic core upper portion (20) that faces away from the rail, at least one strip (28) is detachably connected.

5. Link magnetic rail brake device according to Claim 4,
**characterised in that** the strip (28) is fixed detachably to a lifting device, by means of which the link magnet can be positioned vertically.

6. Link magnetic rail brake device according to any of the preceding claims,
**characterised in that** the first, upper portion (21a, 21b) of a limb (19a, 19b) has a first stepped separating surface (42) and the second, lower portion (23a, 23b) of a limb (19a, 19b) has a second stepped separating surface (44), wherein the first separating surface (42) and the second stepped separating surface (44) have complementary designs and engage in one another.

7. Link magnetic rail brake device according to any of the preceding claims,
**characterised in that** a screw connection (46), which is horizontal in the fitted position, is provided, by means of which the first, upper portion (21a, 21b) of a limb (19a, 19b) and the second, lower portion (23a, 23b) of a limb (19a, 19b) are screwed to one another.

8. Link magnetic rail brake device according to any of the preceding claims,
**characterised in that** in or on at least one end-member magnetic core upper portion (20) an electric connector device (26) for a first cable (50) is arranged, via which the at least one magnetic solenoid winding (9) is supplied with current.

9. Link magnetic rail brake device according to Claim 8,
**characterised in that** the electric connector device (26) is arranged on a lateral surface (54) and/or on a surface of the end-member magnetic core upper portion (20).

10. Link magnetic rail brake device according to Claim 9,
**characterised in that** the electric connector device (26) has an electric terminal in a recess (52) on a lateral surface (54) of the end-member magnetic core upper portion (20), to which the first cable (50) is connected, which cable is brought in through a bore (56) formed in a surface (40) of the end-member magnetic core upper portion (20) that faces away from the rail, which bore opens into the said recess (52).

11. Rail vehicle with at least one link magnetic rail brake device according to at least one of the preceding claims.

## Revendications

1. Dispositif de frein électromagnétique sur rail à maillons d'un véhicule ferroviaire ayant au moins un élément de frein formé d'un aimant (2) à maillons, ayant au moins les caractéristiques suivantes :
a) l'aimant (2) à maillons a un corps (8) de bobine d'électroaimant, au moins un noyau magnétique, deux maillons (14, 15) d'extrémité reliés rigidement au corps (8) de bobine électromagnétique et plusieurs maillons (6) intermédiaires reliés de manière mobile, d'une façon limitée respectivement au corps (8) de bobine électromagnétique et disposés les uns derrière les autres, considéré dans la direction longitudinale du corps (8) de la bobine électromagnétique, ainsi que plusieurs cloisons (10), une cloison (10) étant disposée respectivement entre deux maillons (6) intermédiaires voisins,
b) le corps (8) de la bobine électromagnétique porte au moins un enroulement (9) de bobine électromagnétique,
c) respectivement un maillon (14, 15) d'extrémité a un noyau (7) magnétique de maillon d'extrémité,
d) le corps (8) de la bobine électromagnétique a au moins un tirant (30) supérieur et au moins un tirant (32) inférieur, qui constituent entre eux une ouverture (13) de passage,
e) le noyau (7) magnétique de maillon d'extrémité est, considéré dans un plan en section transversale disposé perpendiculaire à la direction longitudinale du corps (8) de la bobine électromagnétique, en forme de fer à cheval, en ayant une âme (17) et deux branches (19a, 19b) s'éloignant de l'âme (17), dans lequel aux extrémités tournées vers un rail (1) des branches (19a, 19b) sont constitués des épanouissements (16a, 16b) polaires prévus pour le contact de frottement avec le rail (1),
f) l'âme (17) s'étend transversalement à l'ouverture (13) de passage du corps (8) de bobine électromagnétique, **caractérisé en ce que**
g) le noyau (7) magnétique du maillons d'extrémité a une partie (20) supérieure de noyau magnétique de maillons d'extrémité comprenant au moins l'âme (17) et au moins une première partie (21a, 21b), supérieure en position de montage, des branches (19a, 19b), partie (20) supérieure sur laquelle est fixée de manière amovible respectivement une deuxième partie (23a, 23b), inférieure en position de montage et distincte, d'une branche (19a, 19b), à l'extrémité libre de laquelle l'épanouissement (16a, 16b) polaire de la branche (19a, 19b) est constitué, et **en ce que**
h) considéré dans un plan en section transversale disposé perpendiculairement à la direction longitudinale du corps (8) de la bobine électromagnétique, la deuxième partie (23a, 23b) inférieure d'une branche (19a, 19b) est constituée en s'étendant en étant incurvée vers l'intérieur.

2. Dispositif de frein électromagnétique sur rail à maillons suivant la revendication 1, **caractérisé en ce que**, considérée en position de montage, la partie (20) supérieure du noyau magnétique du maillon d'extrémité s'étend dans la direction verticale un peu plus loin vers le bas que le tirant (32) inférieur.

3. Dispositif de frein électromagnétique sur rail à maillons suivant la revendication 1 ou 2, **caractérisé en ce que**, considérée en position de montage, la partie (20) supérieure du noyau magnétique du maillon d'extrémité s'étend dans la direction verticale au moins au-delà vers le haut d'une extrémité, inférieure délimitant l'ouverture (13) de passage, du tirant (30) supérieur.

4. Dispositif de frein électromagnétique sur rail à maillons suivant l'une des revendications précédentes, **caractérisé en ce que** sur au moins une surface (40), tournée vers le rail, de la partie (20) supérieure du noyau magnétique du maillon d'extrémité est fixée de manière amovible au moins une réglette (28).

5. Dispositif de frein électromagnétique sur rail à maillons suivant la revendication 4, **caractérisé en ce que** la réglette (28) est fixée de manière amovible à un dispositif de levage, par lequel l'aimant (2) à maillons peut être déplacé verticalement.

6. Dispositif de frein électromagnétique sur rail à maillons suivant l'une des revendications précédentes, **caractérisé en ce que** la première partie (21a, 21b) supérieure d'une branche (19a, 19b) a une première surface (42) de séparation étagée et la deuxième partie (23a, 23b) inférieure d'une branche (19a, 19b) a une deuxième surface (44) de séparation étagée, la première surface (42) de séparation étagée et la deuxième surface (44) de séparation étagée étant constituées de manière complémentaire et s'interpénétrant.

7. Dispositif de frein électromagnétique sur rail à maillons suivant l'une des revendications précédentes, **caractérisé en ce qu'**il est prévu un vissage (46) horizontal en position de montage par lequel la première partie (21a, 21b) supérieure d'une branche (19a, 19b) et la deuxième partie (23a, 23b) inférieure d'une branche (19a, 19b) sont vissées entre elles.

8. Dispositif de frein électromagnétique sur rail à maillons suivant l'une des revendications précédentes, **caractérisé en ce que** dans ou sur au moins une partie (20) supérieure du noyau magnétique d'un maillon d'extrémité est disposé un dispositif (26) électrique de connexion d'un premier câble (50), par lequel le au moins un enroulement (9) de bobine électromagnétique peut être alimenté en courant.

9. Dispositif de frein électromagnétique sur rail à maillons suivant la revendication 8, **caractérisé en ce que** le dispositif (26) électrique de connexion est disposé sur une surface (54) latérale et/ou sur une surface (40) supérieure s'éloignant du rail (1) de la partie (20) supérieure de noyau magnétique du maillon d'extrémité.

10. Dispositif de frein électromagnétique sur rail à maillons suivant la revendication 9, **caractérisé en ce que** le dispositif (26) électrique de connexion a, dans un évidement (52) sur une surface (54) latérale de la partie (20) supérieure de noyau magnétique du maillon d'extrémité, une borne (22) électrique, à laquelle le premier câble (50) est raccordé, lequel passe dans un trou (56) qui est constitué dans une surface (40), loin du rail, de la partie (20) supérieure de noyau magnétique du maillon d'extrémité et débouche dans l'évidement (52).

11. Véhicule ferroviaire ayant au moins un dispositif de frein électromagnétique sur rail à maillons suivant au moins l'une des revendications précédentes.
